# EUROPEAN PATENT APPLICATION

(11) **EP 2 352 333 A1**
(43) Date of publication of application: **03.08.2011**
(21) Application number: 09827134.9
(22) Date of filing: 30.06.2009
(51) Int. Cl.: H04W 36/06, H04W 8/18

(54) **METHOD, APPARATUS AND SYSTEM FOR AUTOMATICALLY WITCHING BUSINESS**

(30) Priority: 24.11.2008 CN 200810227151
(71) Applicant: Huawei Technologies Co., Ltd., Longgang District, Shenzhen Guangdong 518129 (CN)
(72) Inventor: LI, Huabin, Shenzhen Guangdong 518129 (CN); LIU, Jun, Shenzhen Guangdong 518129 (CN); WU, Si, Shenzhen Guangdong 518129 (CN); LIN, Qing, Shenzhen Guangdong 518129 (CN); LV, Sha, Shenzhen Guangdong 518129 (CN); WU, Lichang, Shenzhen Guangdong 518129 (CN); CUI, Yalei, Shenzhen Guangdong 518129 (CN)
(74) Representative: Körber, Martin Hans
(86) International application number: PCT/CN2009/072558
(87) International publication number: WO 2010/057385

(57) **Abstract**

A method, an apparatus, and a system for automatically switching services are provided. The method includes: determining whether a switching condition is satisfied; migrating a user equipment (UE) using a first service operated on a switchable frequency point to a frequency point operating the first service, when the switching condition is satisfied; and switching the first service operated on the switchable frequency point to a second service. It is determined that a switching condition is satisfied, a UE using a first service operated on a switchable frequency point is migrated to a frequency point operating the first service, so as to switch the first service operated on the switchable frequency point to a second service, thereby improving utilization of spectrum resources and increasing a service income.

## Description

The application claims priority to Chinese Patent Application No. 200810227151.5, filed on November 24, 2008, and entitled "METHOD, APPARATUS, AND SYSTEM FOR AUTOMATICALLY SWITCHING SERVICES", which is incorporated herein by reference in its entirety.

### FIELD OF THE INVENTION

The present invention relates to the field of mobile communications, and in particular, to a method, an apparatus, and a system for automatically switching services.

### BACKGROUND OF THE INVENTION

The Code Division Multiple Access (CDMA) 2000 is the third generation mobile communication standard evolved from the IS-95A/B standard. The CDMA 2000 standard includes a plurality of standards such as cdma2000 1x and cdma2000 1x EV-DO and subsequent standards. After obtaining wireless spectrum resources in a paid or unpaid manner, the CDMA 2000 communication operator divides a spectrum into more than one frequency points, where a part of the frequency points are planned for operating cdma2000 1x services (hereinafter referred to as 1X services), which mainly bear voice services, and another part of the frequency points are planned for operating cdma2000 1x EV-DO services (hereinafter referred to as EV-DO services), which mainly bears data services.

Some communication operators plan all the frequency points for operating the 1X services. For single-service communication operators, when business expansion of the single-service communication operators requires the operation of the EV-DO services, a general solution is provided as follows. New spectrum resources need to be added, which may increase expenses. Alternatively, as limited by the existing spectrum resources, the original frequency point planning is adjusted, and the 1X services are reduced, causing that the service income might decrease and that the development of the EV-DO services might be limited at the same time.

### SUMMARY OF THE INVENTION

Embodiments of the present invention provide a method, an apparatus, and a system for automatically switching services, so as to improve utilization of spectrum resources and increase a service income.

An embodiment of the present invention provides a method for automatically switching services, where the method includes:
determining whether a switching condition is satisfied;
migrating a user equipment (UE) using a first service operated on a switchable frequency point to a frequency point operating the first service, when the switching condition is satisfied; and
switching the first service operated on the switchable frequency point to a second service.

An embodiment of the present invention provides an apparatus for automatically switching services, where the apparatus includes:
a first determination unit, configured to determine whether a switching condition is satisfied;
a migration unit, configured to migrate a UE using a first service operated on a switchable frequency point to a frequency point operating the first service, when the switching condition is satisfied; and
a switching unit, configured to switch the first service operated on the switchable frequency point to a second service, when the switching condition is satisfied.

An embodiment of the present invention provides a system for automatically switching services, where the system includes:
a basic frequency point, configured to operate a first service or a second service; and
a switchable frequency point, configured to determine whether a switching condition is satisfied, migrate a UE using the first service to the basic frequency point or switchable frequency point operating the first service, when the switching condition is satisfied, and switch the first service operated on the switchable frequency point to the second service.

In the embodiment of the present invention, it is determined that a switching condition is satisfied, a UE using a first service operated on a switchable frequency point is migrated to a frequency point operating the first service, so the first service operated on the switchable frequency point is switched to a second service, thereby improving utilization of spectrum resources and increasing a service income.

### BRIEF DESCRIPTION OF THE DRAWINGS

FIG. 1 is a flow chart of a method for automatically switching services according to a first embodiment of the present invention;
FIG. 2 is a schematic view of a frequency point configured in a method for automatically switching services according to a second embodiment of the present invention;
FIG. 3 is a schematic structural view of an apparatus to which the method for automatically switching services is applicable according to the second embodiment of the present invention;
FIG. 4 is a schematic structural view of another apparatus to which the method for automatically switching services is applicable according to the second embodiment of the present invention;
FIG. 5 is a flow chart of the method for automatically switching services according to the second embodiment of the present invention;
FIG. 6 is a schematic structural view of a switchable frequency point operating 1X services in the method for automatically switching services according to the second embodiment of the present invention;
FIG. 7 is a schematic structural view of a switchable frequency point operating EV-DO services in the method for automatically switching services according to the second embodiment of the present invention;
FIG. 8 is a schematic structural view of an apparatus for automatically switching services according to an embodiment of the present invention; and
FIG. 9 is a schematic structural view of a system for automatically switching services according to an embodiment of the present invention.

### DETAILED DESCRIPTION OF THE EMBODIMENTS

The technical solutions of the present invention are further described below in detail with reference to the accompanying drawings and embodiments.

In the embodiments of the present invention, for the existing problems in the prior art, it is found through statistics that 1X services and EV-DO services have different service peak periods, a data amount of the 1X services is great during the day, and a data amount of the EV-DO services is great during the night; according to such a feature, an allocation amount of frequency points required by the 1X services can be reduced when the 1X services are idle, and excess frequency points are used for the EV-DO services. According to the above analysis results, the embodiments of the present invention provide the following technical solutions.

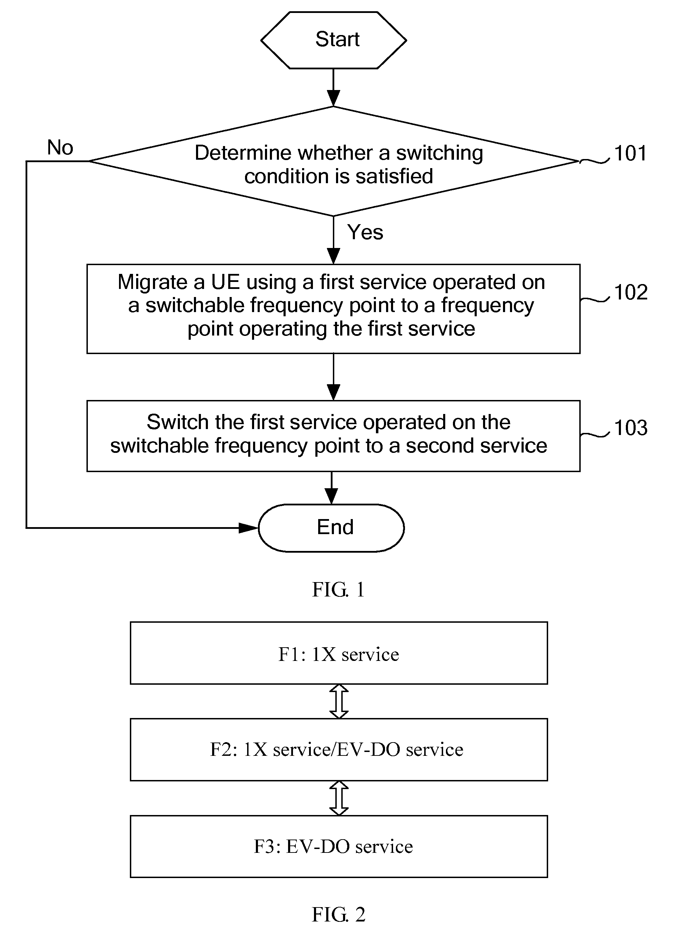

FIG. 1 is a flow chart of a method for automatically switching services according to a first embodiment of the present invention. The method specifically includes the following steps.

In step 101, it is determined whether a switching condition is satisfied.

In step 102, a UE using a first service operated on a switchable frequency point is migrated to a frequency point operating the first service, when the switching condition is satisfied.

In step 103, the first service operated on the switchable frequency point is switched to a second service.

Step 103 may include: blocking a carrier frequency of the first service operated on the switchable frequency point, and unblocking a carrier frequency of the second service operated on the switchable frequency point.

In this embodiment, when it is determined that a switching condition is satisfied, a UE using a first service operated on a switchable frequency point is migrated to a frequency point operating the first service, a carrier frequency of the first service operated on the switchable frequency point is blocked, and a carrier frequency of the second service operated on the switchable frequency point is unblocked, so as to switch the first service operated on the switchable frequency point to the second service, thereby improving utilization of spectrum resources and increasing a service income.

The technical solutions in the embodiments of the present invention are further described below by taking automatic switching between the 1X services and the EV-DO services in a CDMA communication system as an example.

FIG. 2 is a schematic view of a frequency point configured in a method for automatically switching services according to a second embodiment of the present invention. In the CDMA communication system, a part of or all frequency points are configured as switchable frequency points. If a part of the frequency points are configured as the switchable frequency points, the rest frequency points are configured as basic frequency points. In this embodiment, the frequency points have three types, which are respectively F1, F2, and F3. F1 is a basic frequency point operating 1X services, F3 is a basic frequency point operating EV-DO services, and F2 is a switchable frequency point. A signal coverage range of selected frequency points should be taken into consideration during configuration of switchable frequency points. The CDMA communication system should allow the 1X services and the EV-DO services to be configured at the same frequency point.

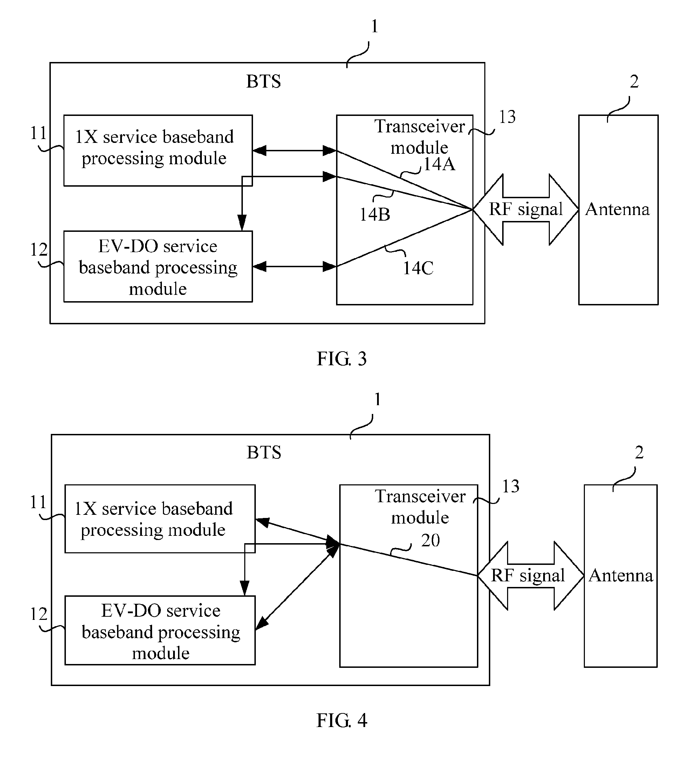

Data of 1X services or EV-DO services switchable to each other in the same cell/sector can be configured on the same base transceiver station (BTS) or different BTSs. In order to realize functions of the embodiments of the present invention, new BTSs can be added in the CDMA communication system, new hardware can be added to the existing BTS, or the redundant capability of the existing BTS hardware can be utilized (for example, channel resources of a 1X/EV-DO service baseband processing module and resources of a transceiver I-channel and Q-channel (IQ) data channel). When an F2 frequency point changes from supporting operation of single 1X services to support switching operations of the 1X services and the EV-DO services, the existing BTS can be used, and only an EV-DO service baseband processing module needs to be added. FIG. 3 is a schematic structural view of an apparatus to which the method for automatically switching services is applicable according to the second embodiment of the present invention. In FIG. 3, a BTS1 and an antenna 2 are included, and radio frequency (RF) signals are transmitted between the BTS1 and the antenna 2, where the BTS1 includes a 1X service baseband processing module 11, an EV-DO service baseband processing module 12, a transceiver module 13, and more than one IQ data channels (for example, 14A, 14B, and 14C in FIG. 3). These modules can be deployed on different boards or on the same board, and the transceiver module 13 may be remote and supports more than one IQ data channels. The IQ data is transmitted between different service baseband processing modules and the transceiver module 13, and the transmission medium is not limited to electricity, light, microwave, and so on, or is directly transferred, or transferred through another module (for example, the IQ data channel 14B, connected to the EV-DO service baseband processing module 12 through the 1X service baseband processing module 11). When the 1X services and the EV-DO services are normally used (that is, not switchable to each other), the BTS statically or dynamically configures the IQ data channels using the transceiver module 13.

FIG. 4 is a schematic structural view of another apparatus to which the method for automatically switching services is applicable according to the second embodiment of the present invention. The difference between FIGs. 4 and 3 lies in that the 1X service baseband processing module 11 and the EV-DO service baseband processing module 12 use the same IQ data channel 20 in the BTS 1 at different time, so as to improve utilization of the BTS device and reduce the average service power consumption.

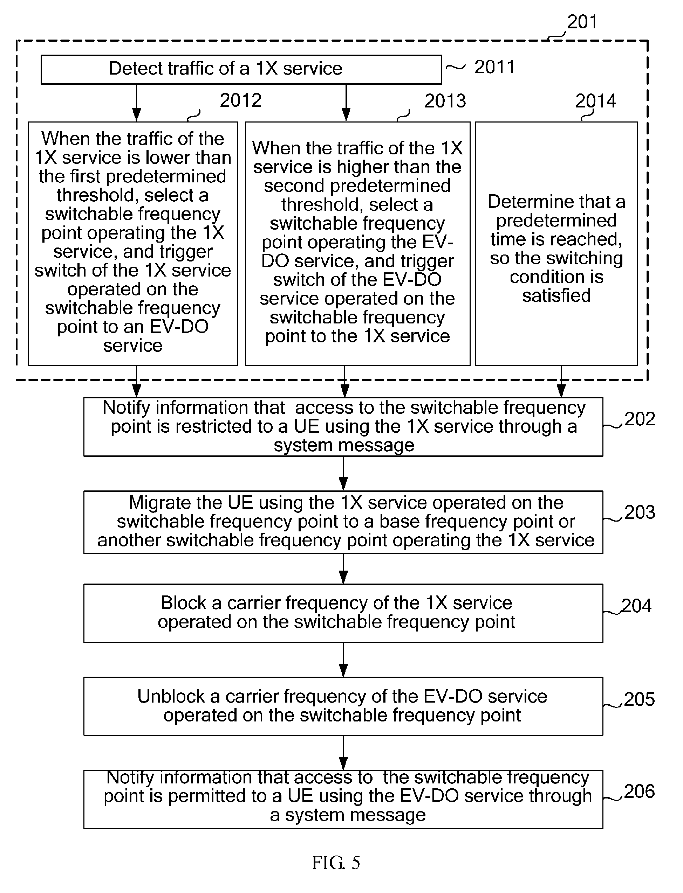

FIG. 5 is a flow chart of the method for automatically switching services according to the second embodiment of the present invention. Based on the above description of the technical solutions, the following steps are specifically included in this embodiment.

In step 201, it is determined whether a switching condition is satisfied.

Step 201 is a step of detecting service switch, and the method for determining whether the switching condition is satisfied may include the following two methods.

In a first method, step 201 may include: detecting service traffic, and determining that the switching condition is satisfied when the service traffic is lower than a first predetermined threshold or when the service traffic is higher than a second predetermined threshold. Specifically, step 201 may include the following steps.

In step 2011, traffic of a 1X service is detected.

In step 2012, when the traffic of the 1X service is lower than the first predetermined threshold, it is determined that the switching condition is satisfied, a switchable frequency point operating the 1X service is selected, and switch of the 1X service operated on the switchable frequency point to an EV-DO service is triggered, where the first service is the 1X service and the second service is the EV-DO service at this time.

In step 2013, when the traffic of the 1X service is higher than the second predetermined threshold, it is determined that the switching condition is satisfied, a switchable frequency point operating the EV-DO service is selected, and switch of the EV-DO service operated on the switchable frequency point to the 1X service is triggered, where the first service is the EV-DO service and the second service is the 1X service at this time.

In a second method, step 201 may specifically include step 2014, in which it is determined whether a predetermined time is reached, and if a predetermined time is reached, the switching condition is satisfied. The predetermined time may be a predetermined date, for example, frequency points of the 1X service are not reduced on important holidays, or the predetermined time may also be a plurality of time periods divided in a day, and can be reasonably set according to service statistical data (which can adopt methods in steps 2011, 2012, and 2013 in combination).

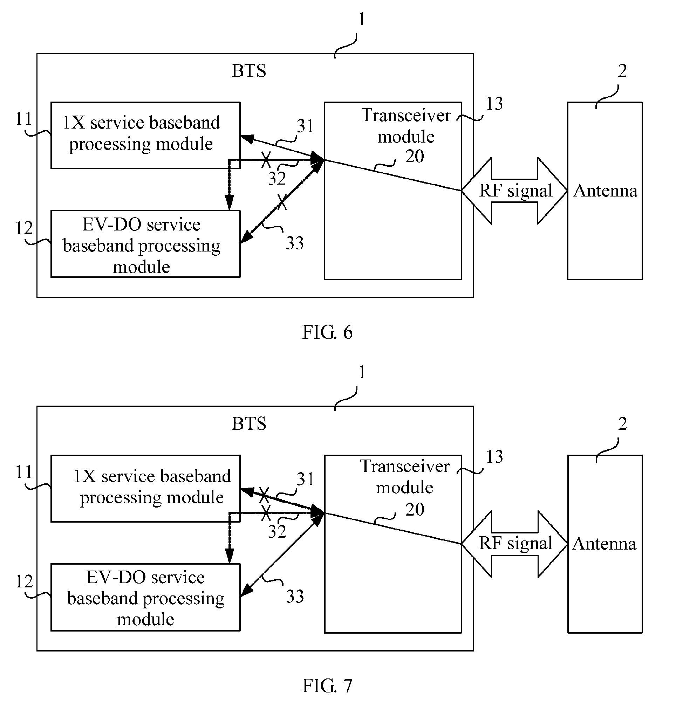

Specifically, it is assumed that traffic of a current 1X service is lower than a predetermined threshold, service switch of a switchable frequency point operating the 1X service needs to be triggered; or, switch of the switchable frequency point to a predetermined service type is triggered according to a predetermined time. Specifically, the switch of the switchable frequency point operating the 1X service to an EV-DO service is triggered. FIG. 6 is a schematic structural view of a switchable frequency point operating 1X services in the method for automatically switching services according to the second embodiment of the present invention. The switchable frequency point operates a 1X service currently, a carrier frequency 31 of the 1X service is in an unblocking state, and carrier frequencies 32 and 33 of the EV-DO service are in a blocking state.

The CDMA communication system determines and records a service type of the current switchable frequency point in a whole network range or a designated range (for example, an urban area or a hot spot region or a cell/sector range) through the above two methods.

In step 202, with respect to FIG. 6, if the switchable frequency point intends to switch the 1X service being operated to the EV-DO service, information that access to the switchable frequency point is restricted is notified through a system message to a UE using the 1X service; in the technical solution of timing switch, the step may also be performed in advance, so a migration quantity and influences caused by the migration are reduced.

In step 203, the UE using the 1X service operated on the switchable frequency point, is migrated to a basic frequency point (for example, F1) or another switchable frequency point (or allowing the service of the UE to be interrupted for reconnection) using the 1X service, and step 203 is a step of preparing for service switch.

In step 204, a carrier frequency of the 1X service operated on the switchable frequency point is blocked.

The CDMA communication system searches the service type recorded for the current switchable frequency point according to information such as cells/sectors/frequency points, and if a service type of the carrier frequency is inconsistent with the forgoing service type, the carrier frequency is blocked. In FIG. 6, the carrier frequency 31 of the 1X service is blocked. Specifically, allocation and connection of the IQ data channel 20 occupied by the carrier frequency of the 1X service can be maintained; in the blocking process with the connection maintained, a transmit power is decreased slowly and the UE is triggered to initiatively handover to another carrier frequency; or information of the IQ data channel 20 occupied by the carrier frequency of the 1X service is cleared, and the IQ data channel 20 is disconnected.

In step 205, a carrier frequency of the EV-DO service operated on the switchable frequency point is unblocked.

In FIG. 6, the carrier frequency 32 or 33 of the EV-DO service can be unblocked. Specifically, connection of a data channel occupied by the carrier frequency of the second service may be maintained; if no IQ data channel can be allocated, an idle data channel can be allocated to the carrier frequency of the EV-DO service, and the EV-DO service baseband processing module 12 is configured to be connected to the transceiver module 13 through the idle IQ data channel. The idle IQ data channel may be a data channel on which no carrier frequency is established or a data channel being occupied by a blocked carrier frequency, for example, the data channel 20 occupied by the carrier frequency 31 in FIG. 6 can be used.

In step 206, information that access to the switchable frequency point is permitted is notified through a system message to a UE using the EV-DO service.

FIG. 7 is a schematic structural view of a switchable frequency point operating EV-DO services in the method for automatically switching services according to the second embodiment of the present invention. Through automatic switching in steps 201 to 206, the switchable frequency point operates an EV-DO service currently, the carrier frequency 31 of the 1X service and the carrier frequency 32 of the EV-DO service are in a blocking state, and the carrier frequency 33 of the EV-DO service is in an unblocking state.

Further, after step 206, this embodiment may further include: carrying a management state of blocking or unblocking in a carrier frequency setup message. If the BTS is reset due to a certain reason, a management state is carried in a carrier frequency setup message of reestablishing a carrier frequency, so as to facilitate the BTS to perform instant processing, thereby avoiding carrier frequency setup failure caused by allocation conflict of resources of the IQ data channels or avoiding a transient signal interference caused by carrier frequency setup success.

In addition, in this embodiment, after the carrier frequency is deleted, allocation and connection of the IQ data channel occupied by the carrier frequency can be maintained, or information of the IQ data channel occupied by the carrier frequency can be cleared initiatively and the IQ data channel occupied by the carrier frequency can be disconnected.

In this embodiment, as transmission resources required by different services are different, after service switch, the CDMA communication system can adjust allocation and management of the transmission resources among different service types according to practical service demands; alternatively, a UE of the switched EV-DO service is allowed to be temporarily connected to dedicated transmission resources of the 1X service, and when the UE of the EV-DO service and the UE of the 1X service perform transmission at the same time, a low priority level is set for the EV-DO service, and a high priority level is set for the 1X service.

In this embodiment, a part of or all frequency points in the CDMA communication system are configured as switchable frequency points, and the switchable frequency point can realize switch of the 1X service and the EV-DO service according to a detection result of the system service switch, so as to improve utilization of spectrum resources and increase the service income; meanwhile, the 1X service baseband processing module and the EV-DO service baseband processing module in the BTS can use the same IQ data channel, so as to improve utilization of the BTS device and reduce the average service power consumption.

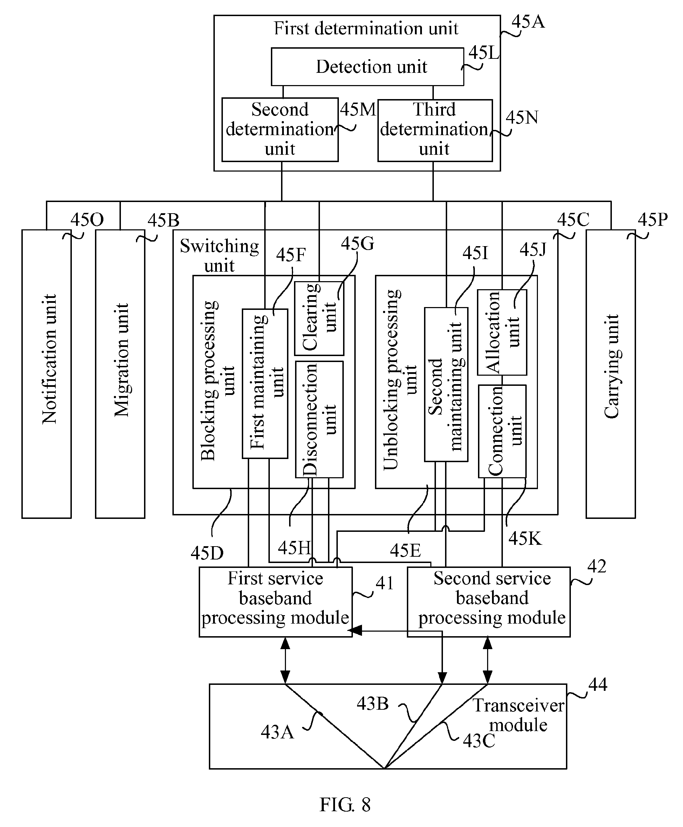

FIG. 8 is a schematic structural view of an apparatus for automatically switching services according to an embodiment of the present invention. This embodiment may include: a first determination unit 45A, a migration unit 45B, and a switching unit 45C. The first determination unit 45A determines whether a switching condition is satisfied, the migration unit 45B migrates a UE using a first service operated on a switchable frequency point to a frequency point operating the first service when it is determined that the switching condition is satisfied, notifies information that access to the switchable frequency point is restricted or information that access to the switchable frequency point is permitted, to a UE by sending a system message to the UE, and when the switching condition is satisfied, the switching unit 45C switches the first service operated on the switchable frequency point to a second service.

The switching unit 45C may include a blocking processing unit 45D and an unblocking processing unit 45E. The blocking processing unit 45D blocks a carrier frequency of the first service operated on the switchable frequency point, and the unblocking processing unit 45E unblocks a carrier frequency of the second service operated on the switchable frequency point.

Further, this embodiment may be a separate functional module integrated in a network element of the CDMA communication system, or may be several modules with independent functions, where the several modules with independent functions may be integrated in different network elements of the CDMA communication system.

Moreover, this embodiment may further include a first service baseband processing module 41, a second service baseband processing module 42, more than one data channels (including 43A, 43B, and 43C) and a transceiver module 44. The first service baseband processing module 41 may be a 1X service baseband processing module, which is connected to the transceiver module 44 through the data channel 43A and processes data of the 1X service, the second service baseband processing module 42 may be an EV-DO service baseband processing module, which is connected to the transceiver module 44 through the data channel 43B or 43C and processes data of the EV-DO service, and the more than one data channels are used for transmitting the data of the first service or the data of the second service. FIG. 8 shows three data channels, and this embodiment may further include a data channel (similar to the application scenario in FIG. 4). The first service baseband processing module 41 and the second service baseband processing module 42 may perform time division multiplexing (TSM) on the data channel, so as to improve utilization of the BTS device and reduce the average service power consumption; the transceiver module 44 sends or receives the data of the first service or the data of the second service.

The blocking processing unit 45D may include a first maintaining unit 45F, where the first maintaining unit 45F decreases a transmit power slowly in a process of maintaining a connection of a data channel occupied by the carrier frequency of the first service and triggers a UE to handover to another carrier frequency initiatively; alternatively, the blocking processing unit 45D may include a clearing unit 45G and a disconnection unit 45H, where the clearing unit 45G clears information of the data channel occupied by the carrier frequency of the first service, and the disconnection unit 45H disconnects the data channel occupied by the carrier frequency of the first service.

The unblocking processing unit 45E may include a second maintaining unit 45I, where the second maintaining unit 45I maintains a connection of a data channel occupied by the carrier frequency of the second service; alternatively, the unblocking processing unit 45E may include an allocation unit 45J and a connection unit 45K, where the allocation unit 45J allocates an idle data channel to the carrier frequency of the second service; and the connection unit 45K connects the data channel allocated to the carrier frequency of the second service.

In this embodiment, the first service baseband processing module 41 may be connected to the first maintaining unit 45F and the disconnection unit 45H in the blocking processing unit 45D, and the second service baseband processing module 42 may be connected to the second maintaining unit 45I and the connection unit 45K in the unblocking processing unit 45E, so as to implement switch from the first service to the second service. In this embodiment, the first service baseband processing module 41 may be connected to the second maintaining unit 45I and the connection unit 45K in the unblocking processing unit 45E, and the second service baseband processing module 42 may be connected to the first maintaining unit 45F and the disconnection unit 45H in the blocking processing unit 45D, so as to implement switch from the second service to the first service.

In this embodiment, the first determination unit 45A may include a detection unit 45L, a second determination unit 45M, and a third determination unit 45N. The detection unit 45L detects service traffic, the second determination unit 45M determines that the switching condition is satisfied when the service traffic is lower than a first predetermined threshold, and the third determination unit 45N determines that the switching condition is satisfied when the service traffic is higher than a second predetermined threshold.

In another embodiment, the first determination unit 45A is specifically configured to determine whether a predetermined time is reached, and when it is determined that the predetermined time is reached, the switching condition is satisfied.

The automatic switching module may further include a notification unit 450 and/or a carrying unit 45P. The notification unit 450 notifies, through a system message, information that access to the switchable frequency point is restricted to the UE using the first service, or notifies information that access to the switchable frequency point is permitted to a UE using the second service, and the carrying unit 45P carries a management state of blocking or unblocking in a carrier frequency setup message.

In this embodiment, baseband processing modules of two different services are included, namely, the first service baseband processing module 41 and the second service baseband processing module 42, so as to implement automatic switch of two services, improve utilization of spectrum resources, and increase the service income. Meanwhile, the first service baseband processing module 41 and the second service baseband processing module 42 in the BTS can use the same data channel, so as to improve utilization of the BTS device and reduce the average service power consumption.

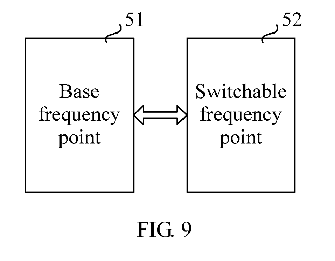

FIG. 9 is a schematic structural view of a system for automatically switching services according to an embodiment of the present invention, which specifically includes a basic frequency point 51 and a switchable frequency point 52. The basic frequency point 51 operates a first service or a second service. The switchable frequency point 52 determines whether a switching condition is satisfied, migrates a UE using the first service to the basic frequency point 51 operating the first service, when the switching condition is satisfied, and switches the first service operated on the switchable frequency point to the second service. Besides, in this embodiment, the switchable frequency point 52 may also migrate the UE using the first service to another switchable frequency point operating the same service.

In this embodiment, the switchable frequency point 52 may be any one of the apparatus for automatically switching services according to the embodiments of the present invention.

In this embodiment, the basic frequency point 51 and the switchable frequency point 52 are included, where the switchable frequency points implement automatic switch of two services, improves utilization of spectrum resources, and increases the service income.

In the case that communication systems with different standards share a transceiver, the technical solutions according to the embodiments of the present invention may also be adopted, so as to implement service switch between the communication systems with different standards.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

Finally, it should be noted that the above embodiments are merely provided for describing the technical solutions of the present invention, but not intended to limit the present invention. It should be understood by persons of ordinary skill in the art that although the embodiments of the present invention have been described in detail with reference to the embodiments, modifications can be made to the technical solutions described in the embodiments, or equivalent replacements can be made to some technical features in the technical solutions, as long as such modifications or replacements do not depart from the spirit and scope of the present invention.

## Claims

1. A method for automatically switching services, comprising:
determining whether a switching condition is satisfied;
migrating a user equipment (UE) using a first service operated on a switchable frequency point to a frequency point operating the first service, when the switching condition is satisfied; and
switching the first service operated on the switchable frequency point to a second service.

2. The method for automatically switching services according to claim 1, wherein the switching the first service operated on the switchable frequency point to a second service comprises:
blocking a carrier frequency of the first service operated on the switchable frequency point, and
unblocking a carrier frequency of the second service operated on the switchable frequency point.

3. The method for automatically switching services according to claim 2, wherein the blocking a carrier frequency of the first service operated on the switchable frequency point comprises:
decreasing a transmit power slowly in a process of maintaining a connection of a data channel occupied by the carrier frequency of the first service; or
clearing information of the data channel occupied by the carrier frequency of the first service, and disconnecting the data channel occupied by the carrier frequency of the first service.

4. The method for automatically switching services according to claim 2, wherein the unblocking a carrier frequency of the second service operated on the switchable frequency point comprises:
maintaining a connection of a data channel occupied by the carrier frequency of the second service; or
allocating an idle data channel to the carrier frequency of the second service, wherein no carrier frequency is established on the idle data channel or the idle data channel is occupied by a blocked carrier frequency.

5. The method for automatically switching services according to any one of claims 1 to 4, wherein the determining whether a switching condition is satisfied comprises:
detecting service traffic; and
determining that the switching condition is satisfied when the service traffic is lower than a first predetermined threshold; or
determining that the switching condition is satisfied when the service traffic is higher than a second predetermined threshold.

6. The method for automatically switching services according to any one of claims 1 to 4, wherein the determining whether a switching condition is satisfied comprises: determining whether a predetermined time is reached, and if a predetermined time is reached, the switching condition is satisfied.

7. The method for automatically switching services according to any one of claims 1 to 4, wherein the migrating a UE using a first service operated on a switchable frequency point to a frequency point operating the first service comprises: migrating the UE using the first service operated on the switchable frequency point, to a basic frequency point or a switchable frequency point operating the first service.

8. The method for automatically switching services according to claim 7, wherein before migrating the UE using the first service operated on the switchable frequency point to the frequency point operating the first service, the method further comprises: notifying, through a system message, information that access to the switchable frequency point is restricted, to the UE using the first service; and
after the first service operated on the switchable frequency point is switched to the second service, the method further comprises: notifying, through a system message, information that access to the switchable frequency point is permitted, to a UE using the second service.

9. The method for automatically switching services according to claim 2, wherein after the blocking or unblocking, the method further comprises: carrying a management state of blocking or unblocking in a carrier frequency setup message.

10. An apparatus for automatically switching services, comprising:
a first determination unit, configured to determine whether a switching condition is satisfied;
a migration unit, configured to migrate a user equipment (UE) using a first service operated on a switchable frequency point to a frequency point operating the first service, when the switching condition is satisfied; and
a switching unit, configured to switch the first service operated on the switchable frequency point to a second service.

11. The apparatus for automatically switching services according to claim 10, wherein the switching unit comprises:
a blocking processing unit, configured to block a carrier frequency of the first service operated on the switchable frequency point; and
an unblocking processing unit, configured to unblock a carrier frequency of the second service operated on the switchable frequency point.

12. The apparatus for automatically switching services according to claim 11, wherein the blocking processing unit comprises:
a first maintaining unit, configured to decrease a transmit power slowly in a process of maintaining a connection of a data channel occupied by the carrier frequency of the first service; or
a clearing unit, configured to clear information of the data channel occupied by the carrier frequency of the first service, and a disconnection unit, configured to disconnect the data channel occupied by the carrier frequency of the first service.

13. The apparatus for automatically switching services according to claim 11, wherein the unblocking processing unit comprises:
a second maintaining unit, configured to maintain a connection of a data channel occupied by the carrier frequency of the second service; or
an allocation unit, configured to allocate an idle data channel to the carrier frequency of the second service; and a connection unit, configured to connect the data channel allocated to the carrier frequency of the second service.

14. The apparatus for automatically switching services according to any one of claims 10 to 13, wherein the first determination unit comprises:
a detection unit, configured to detect service traffic; and
a second determination unit, configured to determine that the switching condition is satisfied, when the service traffic is lower than a first predetermined threshold; or a third determination unit, configured to determine that the switching condition is satisfied, when the service traffic is higher than a second predetermined threshold.

15. The apparatus for automatically switching services according to any one of claims 10 to 13, wherein the first determination unit is specifically configured to determine whether a predetermined time is reached, and if it is determined that the predetermined time is reached, the switching condition is satisfied.

16. The apparatus for automatically switching services according to any one of claims 10 to 13, further comprising: a notification unit, configured to notify, through a system message, information that access to the switchable frequency point is restricted, to the UE using the first service, or notify, through a system message, information that access to the switchable frequency point is permitted, to a UE using the second service.

17. The apparatus for automatically switching services according to any one of claims 10 to 13, further comprising: a carrying unit, configured to carry a management state of blocking or unblocking in a carrier frequency setup message.

18. The apparatus for automatically switching services according to claim 10, further comprising:
a first service baseband processing module, connected to a transceiver module through a data channel, and configured to process data of the first service;
a second service baseband processing module, connected to the transceiver module through a data channel, and configured to process data of the second service;
more than one data channels, configured to transmit the data of the first service or the data of the second service; and
the transceiver module, configured to send or receive the data of the first service or the data of the second service.

19. The apparatus for automatically switching services according to claim 18, wherein the first service baseband processing module and the second service baseband processing module perform time-sharing multiplex (TDM) on the more than one data channels.

20. A system for automatically switching services, comprising:
a basic frequency point, configured to operate a first service or a second service; and
a switchable frequency point, configured to determine whether a switching condition is satisfied, migrate a user equipment (UE) using the first service to the basic frequency point or switchable frequency point operating the first service, when the switching condition is satisfied, and switch the first service operated on the switchable frequency point to the second service.
